# EUROPEAN PATENT APPLICATION

(11) **EP 2 146 539 A1**
(43) Date of publication of application: **20.01.2010**
(21) Application number: 09727131.6
(22) Date of filing: 05.03.2009
(51) Int. Cl.: H04W 36/02

(54) **METHOD FOR BEARER SUSPENDING, METHOD FOR BEARER RESUMING, AND GATEWAY AGENT**

(30) Priority: 03.04.2008 CN 200810091609
(71) Applicant: Huawei Technologies Co., Ltd., Longgang District Shenzhen Guangdong 518129 (CN)
(72) Inventor: SUN, Xiaoji c/o Huawei Technologies Co.Ltd., Longgang District 518129 Shenzhen (CN); WU, Wenfu c/o Huawei Technologies Co.Ltd., Longgang District 518129, Shenzhen (CN); ZHANG, Yanping c/o Huawei Technologies Co.Ltd., Longgang District 518129, Shenzhen (CN)
(74) Representative: Kreuz, Georg Maria
(86) International application number: PCT/CN2009/070654
(87) International publication number: WO 2009/121255

(57) **Abstract**

A bearer suspension method, a bearer resumption method, and a gateway agent are provided. The bearer suspension method includes the following steps. A gateway agent receives a Bearer Suspend Request sent by a mobility management entity (MME) when a user equipment (UE) is handed over from an evolved universal mobile telecommunications system (UMTS) terrestrial radio access network (EUTRAN) to a global system for mobile communications (GSM)/enhanced data rates for GSM evolution (EDGE) radio access network (GERAN). A bearer that needs to be suspended is suspended according to the request. The bearer resumption method includes the following steps. In a process of handover of a UE from a GERAN to an EUTRAN or tracking area update (TAU) or Service Request, the gateway agent receives a Bearer Resume Request sent by an MME. A bearer that needs to be resumed is resumed according to the request.

## Description

### CROSS-REFERENCE TO RELATED APPLICATION

The application claims the benefit of priority to Chinese Patent Application No. 200810091609.9, filed on April 3, 2008 and entitled "BEARER SUSPENSION METHOD, BEARER RESUMPTION METHOD, AND GATEWAY AGENT", which is incorporated herein by reference in its entirety.

### FIELD OF THE TECHNOLOGY

The present invention relates to the field of mobile communication technology, and more particularly to a bearer suspension method, a bearer resumption method, and a gateway agent.

### BACKGROUND OF THE INVENTION

In a radio evolved network, in order to bring better experience and services for end users, a network side may suspend some services or related bearers during service processing according to operator policies in combination with user characteristics or service characteristics, and resume the corresponding services or bearers for continual use when the network resources are resumed, for example, a single radio voice call continuity (SR VCC) service.

When a user using a voice service is handed over from an evolved universal mobile telecommunications system (UMTS) terrestrial radio access network (EUTRAN) to a global system for mobile communications (GSM)/enhanced data rates for GSM evolution (EDGE) radio access network (GERAN), the voice service needs to be handed over to the GERAN to ensure voice continuity. At the same time, non-voice bearer resources of the user in the EUTRAN need to be reserved, so as to ensure that the original service may be resumed when the user is handed over from the GERAN back to the EUTRAN. However, in the prior art, no method is proposed so far to suspend and resume bearers in the EUTRAN.

### SUMMARY OF THE INVENTION

Accordingly, the present invention is directed to a bearer suspension method, a bearer resumption method, a gateway agent, and a mobile communication system, so as to suspend and resume bearer resources. The technical solutions are described in the following.

The present invention provides a bearer suspension method, which includes the following steps. A gateway agent receives a Bearer Suspend Request sent by a mobility management entity (MME) when a user equipment (UE) is handed over from an evolved universal mobile telecommunications system (UMTS) terrestrial radio access network (EUTRAN) to a global system for mobile communications (GSM)/enhanced data rates for GSM evolution (EDGE) radio access network (GERAN). The Bearer Suspend Request includes a bearer identity or a user identity. The gateway agent suspends a bearer corresponding to the bearer identity or a bearer corresponding to the user identity according to the Bearer Suspend Request.

As a first aspect the present invention provides a gateway agent, which includes a bearer-suspend-request receiving unit and a bearer-suspend processing unit.

The bearer-suspend-request receiving unit is adapted to receive a Bearer Suspend Request sent by an MME. The Bearer Suspend Request includes a bearer identity or a user identity.

The bearer-suspend processing unit is adapted to suspend a bearer corresponding to the bearer identity or a bearer corresponding to the user identity according to the bearer identity or the user identity included in the Bearer Suspend Request received by the bearer-suspend-request receiving unit.

As a second aspect the present invention provides a bearer resumption method, which includes the following steps. A gateway agent receives a Bearer Resume Request sent by an MME in a process of handover of a UE from a GERAN to an EUTRAN or tracking area update (TAU) or Service Request. The Bearer Resume Request includes a bearer identity or a user identity. The gateway agent resumes a bearer corresponding to the bearer identity or a bearer corresponding to the user identity according to the Bearer Resume Request.

As a third aspect the present invention provides a gateway agent, which includes a bearer-resume-request receiving unit and a bearer-resume processing unit.

The bearer-resume-request receiving unit is adapted to receive a Bearer Resume Request sent by an MME. The Bearer Resume Request includes a bearer identity or a user identity.

The bearer-resume processing unit is adapted to resume a bearer corresponding to the bearer identity or a bearer corresponding to the user identity according to the bearer identity or the user identity included in the Bearer Resume Request received by the bearer-resume-request receiving unit.

As a fourth aspect the present invention provides a mobile communication system, which includes an MME and a gateway agent.

The MME is adapted to send a Bearer Suspend Request or a Bearer Resume Request to a gateway agent. The Bearer Suspend Request or Bearer Resume Request includes a bearer identity or a user identity.

The gateway agent is adapted to suspend or resume a bearer corresponding to the bearer identity or a bearer corresponding to the user identity according to the Bearer Suspend Request or Bearer Resume Request sent by the MME.

Through the foregoing technical solutions, when network handover is performed on a user, a gateway agent receives a Bearer Suspend Request sent by an MME, and suspends bearers of some specific services or bearers corresponding to the user identity. When network resources are resumed, the gateway agent receives a Bearer Resume Request sent by the MME, and resumes the bearers of the specific services or the bearers corresponding to the user identity for continual use, so that the problem in the prior art that bearers cannot be suspended or resumed in an EUTRAN is solved.

### BRIEF DESCRIPTION OF THE DRAWINGS

FIG. 1 is a flow chart of the implementation of a method according to Embodiment 1 of the present invention;
FIG. 2 is a flow chart of the implementation of a method according to Embodiment 2 of the present invention;
FIG. 3 is a flow chart of the implementation of a method according to Embodiment 3 of the present invention;
FIG. 4 is a flow chart of the implementation of a method according to Embodiment 4 of the present invention;
FIG. 5 is a flow chart of the implementation of a method according to Embodiment 5 of the present invention;
FIG. 6 is a flow chart of the implementation of a method according to Embodiment 6 of the present invention;
FIG. 7 is a schematic structural view of a gateway agent according to an embodiment of the present invention;
FIG. 8 is a flow chart of the implementation of a method according to Embodiment 7 of the present invention;
FIG. 9 is a flow chart of the implementation of a method according to Embodiment 8 of the present invention;
FIG. 10 is flow chart of the implementation of a method according to Embodiment 9 of the present invention;
FIG. 11 is a flow chart of the implementation of a method according to Embodiment 10 of the present invention;
FIG. 12 is a flow chart of the implementation of a method according to Embodiment 11 of the present invention;
FIG. 13 is an schematic structural view of a gateway agent according to another embodiment of the present invention; and
FIG. 14 is a schematic architectural view of a mobile communication system according to an embodiment of the present invention.

### DETAILED DESCRIPTION OF THE EMBODIMENTS

Firstly, in an embodiment, the present invention provides a bearer suspension method, which includes the following steps. A gateway agent receives a Bearer Suspend Request sent by an MME when a UE is handed over from an EUTRAN to a GERAN. The Bearer Suspend Request includes a bearer identity or a user identity. The gateway agent suspends a bearer corresponding to the bearer identity or a bearer corresponding to the user identity according to the Bearer Suspend Request.

The MME sends the Bearer Suspend Request to the gateway agent according to a target network type and/or a user bearer type. For example, when a network side or a user needs to perform operations of bearer suspension or bearer resumption for bearers of different services, the MME maps different user bearer types according to the different services, and then determines which bearers need to be suspended or resumed according to the target network type, so that the Bearer Suspend Request includes bearer identity information about the bearers. When all the bearers of the user need to be suspended, the MME may also include user identity information in the Bearer Suspend Request, indicating that all the bearers corresponding to the user identity are suspended.

On receiving the Bearer Suspend Request, the gateway agent buffers or discards data packets after receiving the data packets of the bearers, and stops paging the UE till the bearer is resumed.

The MME may send the Bearer Suspend Request to the gateway agent after receiving a Relocation Required message or a Relocation Request Ack message or an HO Complete message. Alternatively, the MME may forward the Bearer Suspend Request to the gateway agent after receiving the request sent by a single radio voice call continuity (SR VCC) inter-working function (S-IWF).

The gateway agent may be a serving gateway (SGW) or a packet data network gateway (PGW). When the gateway agent is a PGW, the PGW receives the Bearer Suspend Request forwarded by the MME through the SGW.

After the bearer is suspended, the gateway agent sends a Bearer Suspend Response to the MME. The MME forwards the Bearer Suspend Response to the UE. The UE stops sending Uplink Data of the suspended bearer according to the Bearer Suspend Response.

In the accompanying drawings of the embodiments, a call session control function (CSCF), an Internet Protocol (IP) multimedia subsystem (IMS) circuit-switching (CS) control function (ICCF)/domain transfer function (DTF), a media gateway control function (MGCF), and a voice call continuity-application server (VCC-AS) are all network entities in an IMS domain. In the embodiments of the present invention, a voice call is anchored in the VCC-AS in the IMS domain. The anchoring of the call in the IMS domain and domain handover during the call handover are described in the prior art, so the details thereof will not be repeated herein again.

The gateway agent mentioned in the embodiments represents a gateway capable of buffering data packets for a user and instructing the MME to page the user, and also capable of forwarding data as an agent.

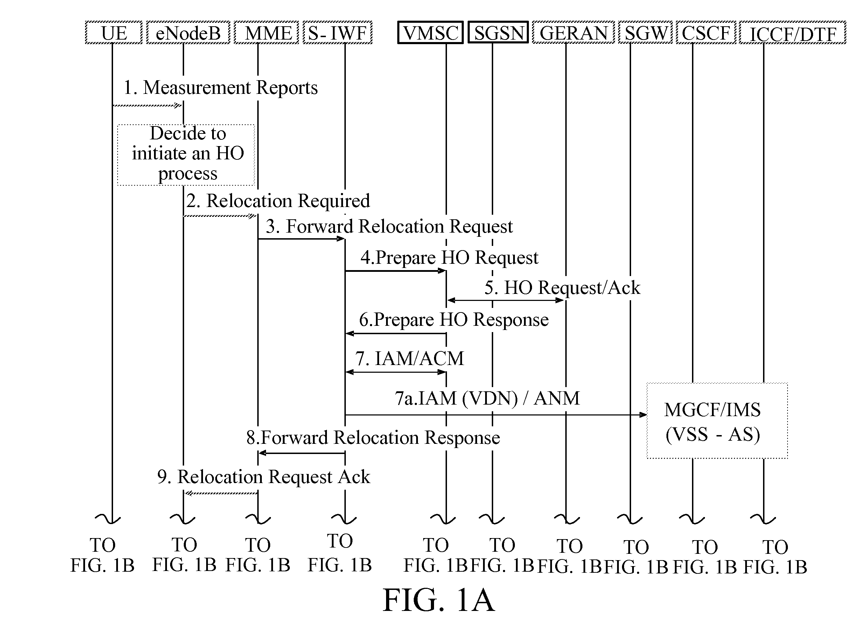

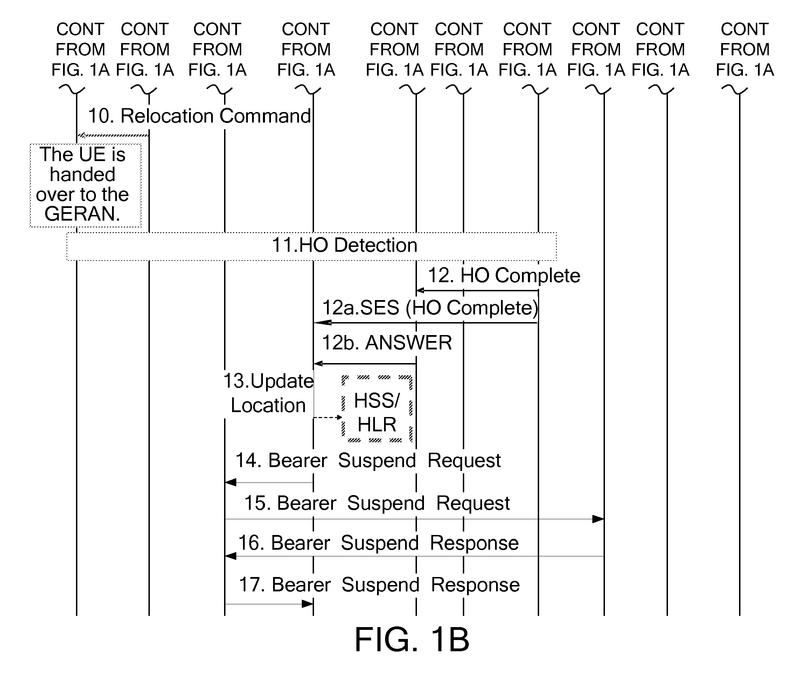

Several embodiments of bearer suspension are illustrated below with reference to Figures 1 to 6.

### Embodiment 1

An MME sends a message to instruct a gateway agent SGW to suspend related bearers. After receiving the message, the SGW suspends the corresponding bearers. Subsequently, corresponding received data packets are buffered or discarded and a page is no longer sent. When suspended bearer resource needs to be resumed, the MME instructs the SGW to resume the use of corresponding bearer resources and resume the paging service. Referring to FIG. 1, the specific steps in Embodiment 1 are as follows.

In step 1, a UE sends Measurement Reports to an evolved node base (eNodeB).

In step 2, the eNodeB decides to initiate an HO process according to the Measurement Reports, and sends a Relocation Required to a source MME. The message includes a source to target container, a target access network identity, and the like.

In step 3, the MME initiates a standard PS-PS HO process, and sends a Forward Relocation Request to an S-IWF. Context information about the UE included in the message includes a PGW address, a PGW tunnel identity (PGW TEID), an SGW address, and an SGW TEID.

In step 4, the S-IWF hands over a voice bearer for a user and sends a Prepare HO Request to a visited mobile switching center (VMSC).

In step 5, the VMSC sends an HO Request to a GERAN for resource allocation. After resource preparation is completed, the GERAN sends an HO Request Ack to notify the VMSC that the resource preparation is finished.

In step 6, the VMSC sends a Prepare HO Response to the S-IWF.

In step 7, the S-IWF sends an initial address message (IAM) to the VMSC. After receiving the IAM message, the VMSC returns an address complete message (ACM) to the S-IWF.

In step 7a, the S-IWF sends the IAM message, including a VCC domain transfer number (VDN) to establish anchoring to an IMS domain. An MGCF forwards the IAM and an answer message (ANM) to a VCC-AS and the S-IWF.

In step 8, the S-IWF sends a Forward Relocation Response to notify the MME that the target resource establishment is completed.

In step 9, the MME sends a Relocation Request Ack to notify the eNodeB that the target resource preparation is completed.

In step 10, the eNodeB sends a Relocation Command to instruct the UE to be handed over to a target network.

In step 11, the UE is handed over to the target network and detected by the target network.

In step 12, the GERAN notifies the S-IWF that the handover is completed through the VMSC.

In step 13, which is optional, if the user is not registered with a home subscriber server (HSS)/home location register (HLR), the S-IWF needs to update location information about the user in the HSS/HLR.

In step 14, the S-IWF learns that the user handover is completed according to step 12, and sends a Bearer Suspend Request to instruct the MME to suspend the bearer. The message includes a bearer identity or a user identity that needs to be suspended.

In step 15, after receiving the Bearer Suspend Request sent by the S-IWF, the MME forwards the request including the bearer identity or the user identity that needs to be suspended to the SGW. The SGW receives the request, and sets a bearer corresponding to the bearer identity or all the bearers corresponding to the user identity in a suspended state. When receiving a data packet of a corresponding bearer, the SGW buffers or discards the data packet and will not initiate a paging process to page the user before the bearer is resumed.

In step 16, after suspending the corresponding bearer, the SGW sends a Bearer Suspend Response to notify the MME. The message includes a cause value indicating the success of the suspension.

In step 17, the MME sends the Bearer Suspend Response to notify the S-IWF that the bearer suspension operation is completed. The message includes the cause value indicating the success of the suspension.

### Embodiment 2

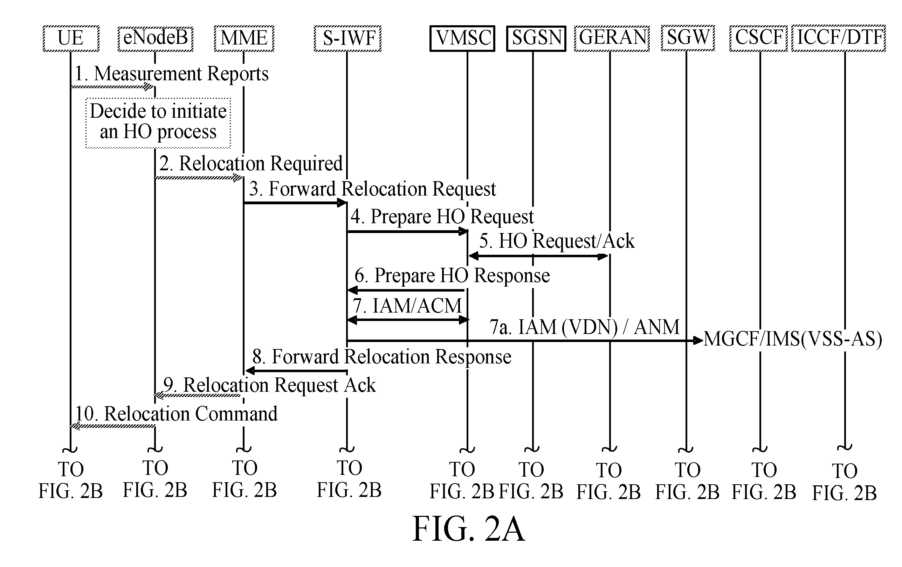

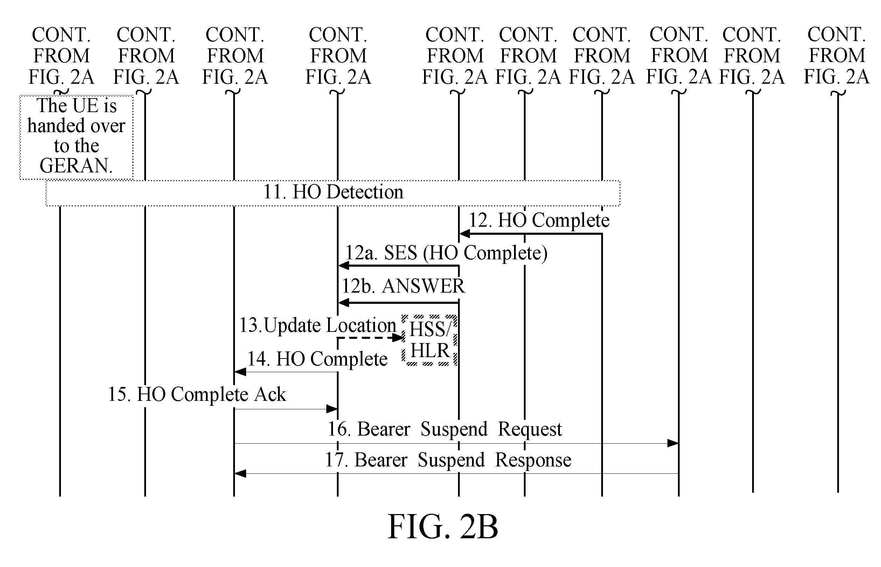

Referring to FIG. 2, a difference between this embodiment and Embodiment 1 is that an MME initiates a process of suspending a bearer after receiving an HO Complete message sent by an S-IWF. The specific steps are as follows.

Steps 1 to 13 are the same as steps 1 to 13 in Embodiment 1.

In step 14, the S-IWF notifies the MME that the user is already handed over to a target.

In step 15, the MME sends an HO Complete Ack to the S-IWF.

In step 16, the MME learns that the user is handed over to a target network, and sends a Bearer Suspend Request to the gateway agent SGW. The message includes a bearer identity or a user identity that needs to be suspended. The SGW receives the request, and suspends a corresponding bearer. When receiving a data packet, the SGW buffers or discards the data packet and will not initiate a paging process to page the user before the bearer is resumed.

In step 17, the SGW sends a Bearer Suspend Response to notify the MME that the suspension operation is completed.

### Embodiment 3

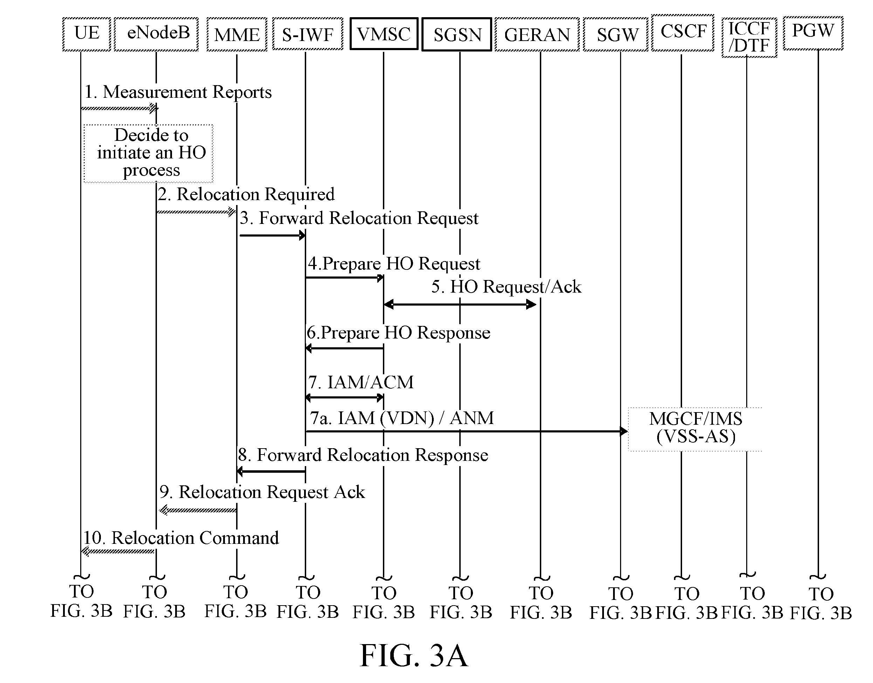

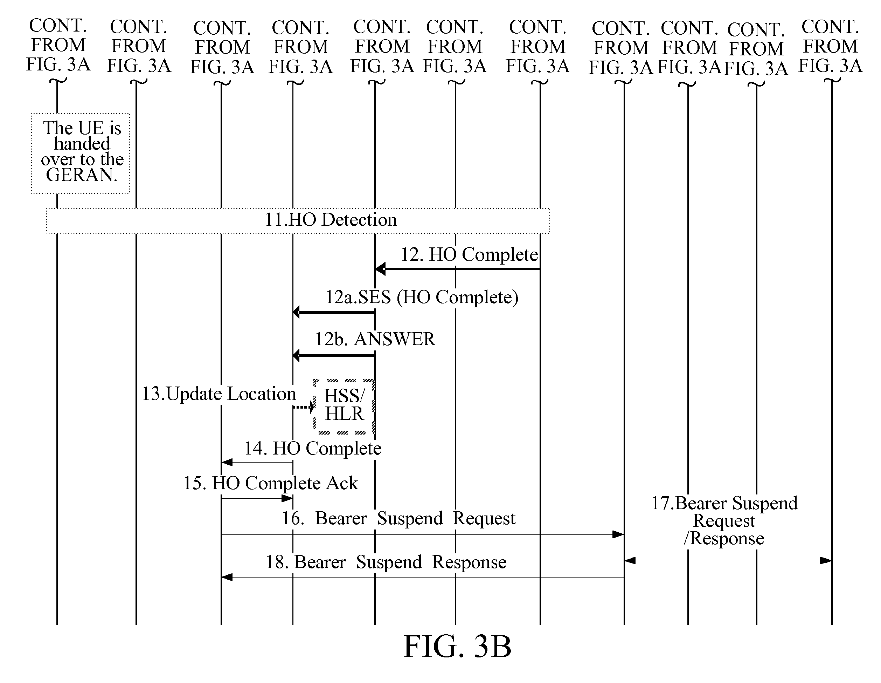

Referring to FIG. 3, a difference between this embodiment and Embodiment 2 is as follows. In this embodiment, the gateway agent is a PGW, so that a Bearer Suspend Request needs to be sent to the PGW. Thereby, the PGW suspends a related bearer, and buffers or discards a data packet after receiving the data packet. The specific steps are as follows.

Steps 1 to 15 are the same as steps 1 to 15 in Embodiment 2.

In step 16, the MME sends a Bearer Suspend Request to the SGW. The message includes a bearer identity or a user identity that needs to be suspended.

In step 17, after receiving the Bearer Suspend Request, the SGW sends the Bearer Suspend Request to a corresponding PGW. The message includes the bearer identity or the user identity that needs to be suspended. On receiving the request, the PGW suspends a bearer corresponding to the bearer identity or all the bearers corresponding to the user identity, and notifies the SGW that the bearer suspension operation is completed. The message includes a cause value indicating the success of the bearer suspension.

In step 18, the SGW sends a Bearer Suspend Response message to notify the MME that the bearer suspension operation is completed. The message includes the cause value indicating the success of the bearer suspension.

### Embodiment 4

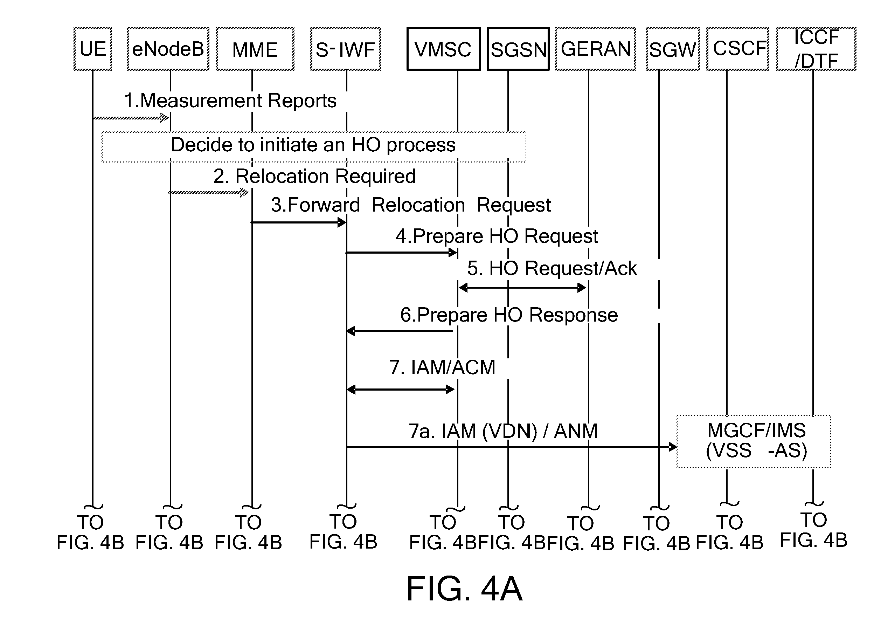

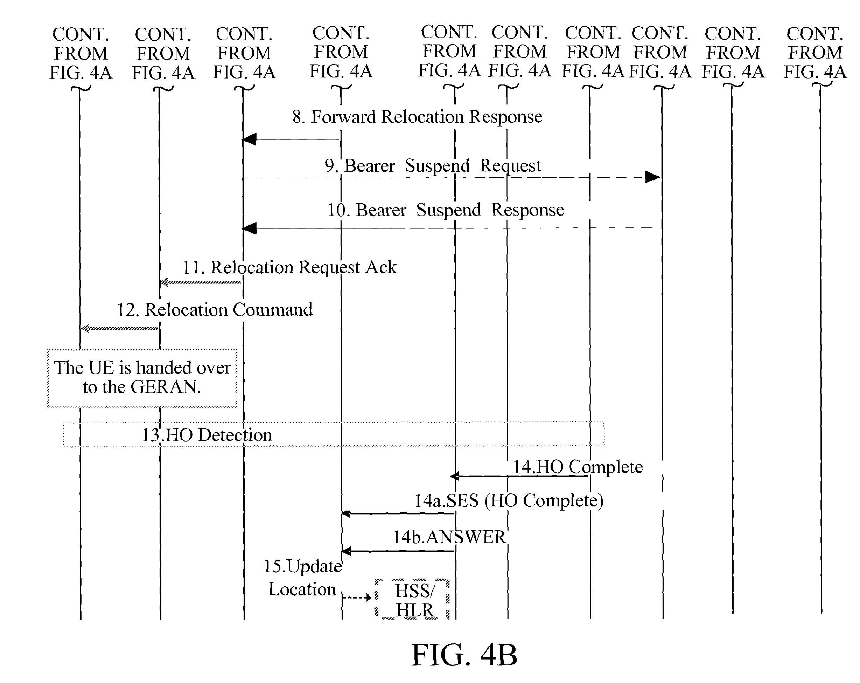

In this embodiment, referring to FIG. 4, an MME sends a Bearer Suspend Request to an SGW after receiving a Forward Relocation Response. This process and the subsequent processes are not in a particular time sequence. The specific steps are as follows.

Steps 1 to 8 are the same as steps 1 to 8 in Embodiment 1.

In step 9, after receiving a Forward Relocation Response message, the MME sends a Bearer Suspend Request. The message includes a bearer identity or a user identity that needs to be suspended.

In step 10, after receiving the Bearer Suspend Request, the SGW suspends a bearer corresponding to the bearer identity or all the bearers corresponding to the user identity. That is, after receiving a data packet of a corresponding bearer, the SGW buffers or discards the data packet and will not initiate a paging process to page the user.

In step 11, the MME sends a Relocation Request Ack to an eNodeB, and includes a CS-covered indication for the UE in a non-access stratum (NAS) message. The CS-covered indication indicates that other service bearers of the UE are already suspended. Alternatively, the CS-covered indication includes a bearer identity that needs to be suspended, so as to inform the UE that related bearers are already suspended.

In step 12, the eNodeB sends a Relocation Command to the UE. The message includes a C S-covered indication or a suspended bearer identity. After receiving the message, the UE no longer sends Uplink Data of a suspended bearer. It should be noted that, the notification of the UE that the bearer is suspended is optional, as the UE is capable of acquiring that a current network is a GERAN or a UTRAN or an EUTRAN through broadcast information, and determining whether to send an Uplink Data packet in combination with its own network processing capability. Steps 13 to 15 are the same as steps 11 to 13 in Embodiment 1.

### Embodiment 5

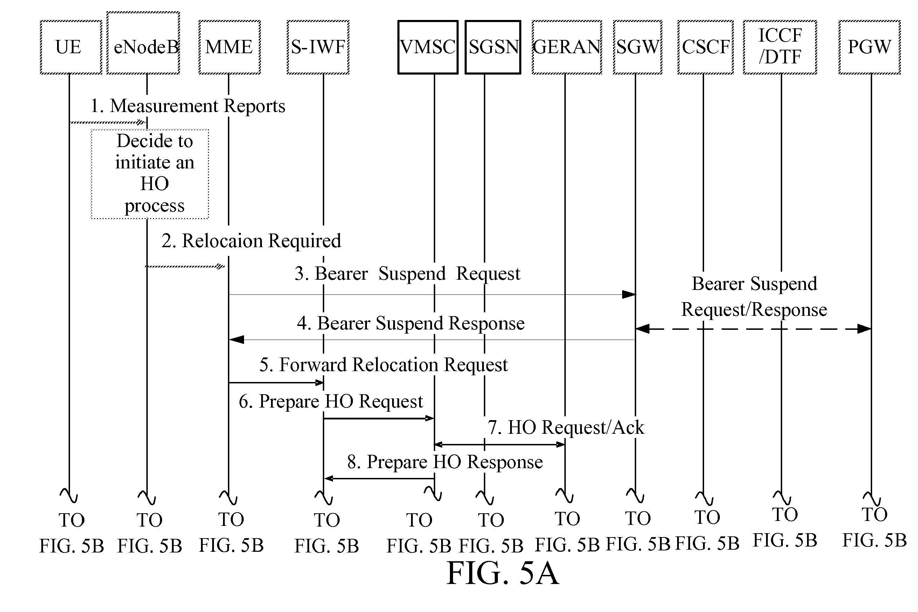

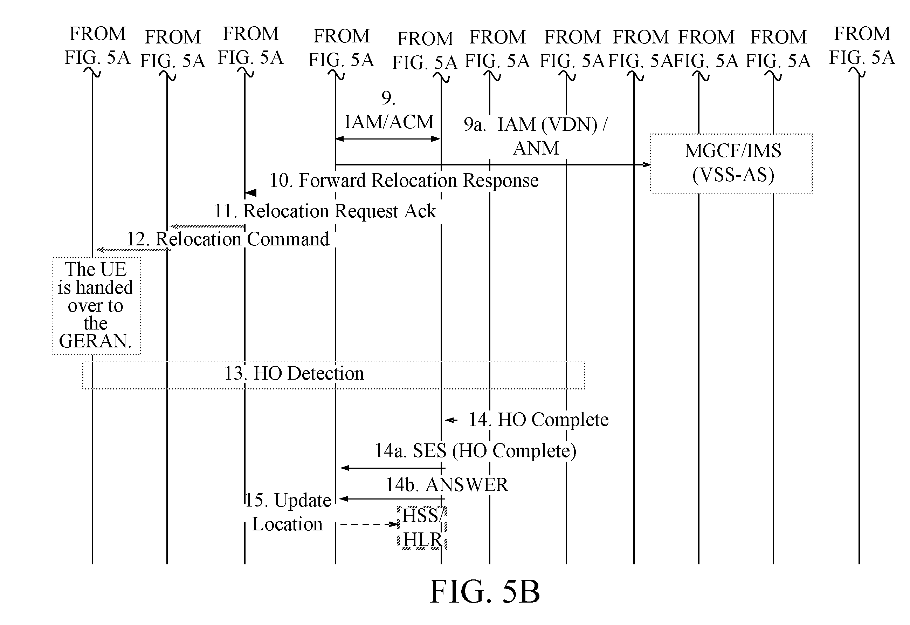

As shown in FIG. 5, a difference between this embodiment and Embodiment 4 lies in a time point of initiating the bearer suspension process. In this embodiment, when receiving a Relocation Required sent by an eNodeB, an MME initiates a Bearer Suspend Request to an SGW. The SGW performs corresponding operations according to the received Bearer Suspend Request and suspends a bearer. The specific steps are as follows.

Steps 1 and 2 are the same as steps 1 and 2 in Embodiment 1.

In steps 3 and 4, the MME initiates a bearer suspension operation in the same manner as the operation in steps 9 and 10 in Embodiment 4. It should be noted that, if a PGW serves as the gateway agent, that is, data is buffered on the PGW for an idle user, the Bearer Suspend Request needs to be sent to the PGW.

Steps 5 to 10 are the same as steps 3 to 8 in Embodiment 1.

Steps 11 and 12 are the same as steps 11 and 12 in Embodiment 4.

Steps 13 to 15 are the same as steps 11 to 13 in Embodiment 1.

### Embodiment 6

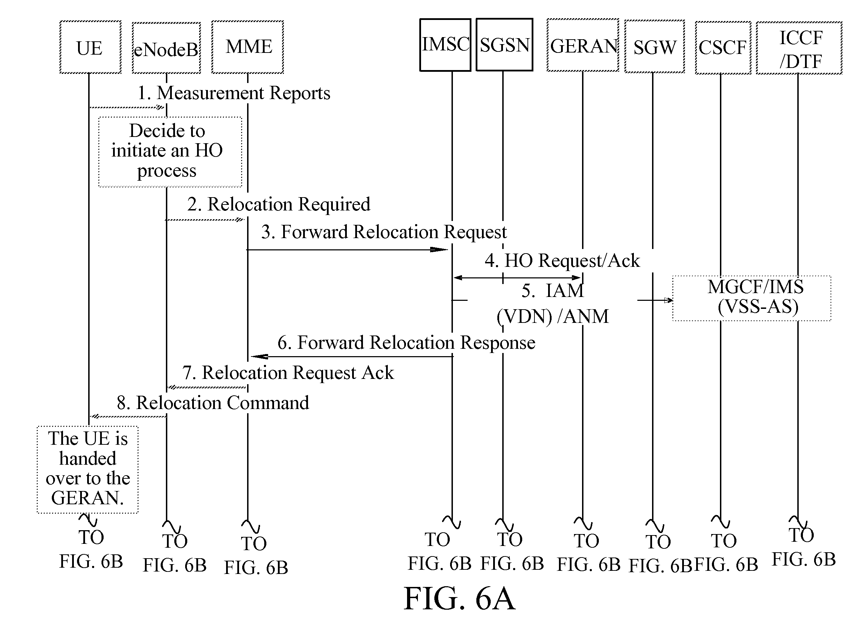

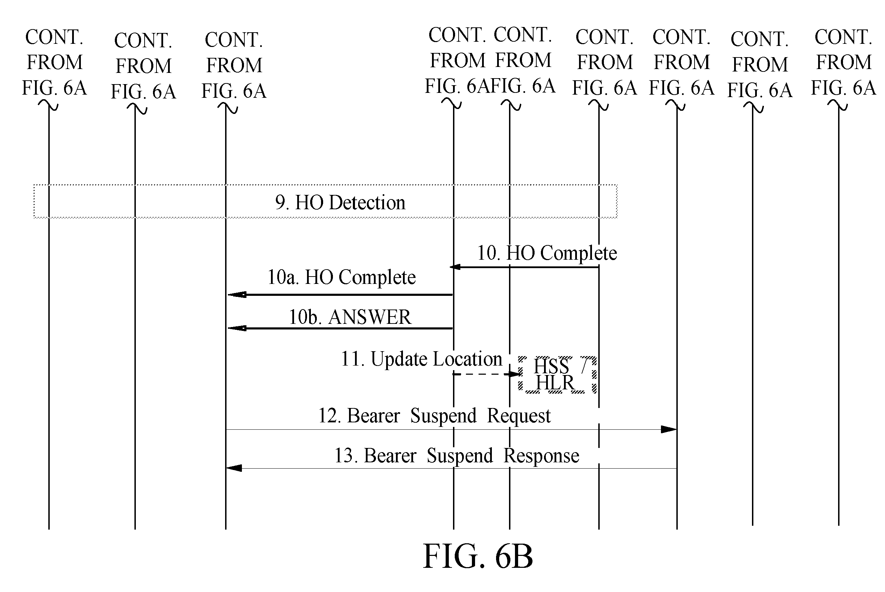

The functions of an S-IWF are integrated in a VMSC to form a new network entity instant message service center (IMSC) (target). Thus, when the IMSC sends an HO Complete command, an MME instructs an SGW to suspend a bearer that needs to be suspended. This embodiment is basically the same as Embodiment 1. Referring to FIG. 6, message processing between the S-IWF and the VMSC is internal processing, which is not embodied in FIG. 6. The specific steps are as follows.

Steps 1 to 3 are the same as steps 1 to 3 in Embodiment 1. In step 4, resource preparation is made for a user to get access to a target.

In step 5, after the target resource preparation is completed, the IMSC needs to anchor a call in a DTF of an IMS domain.

Steps 6 to 13 are the same as corresponding steps in Embodiment 1. Differences are that the interaction between the S-IWF and the VMSC is internal interaction which will not be described herein, and the interaction between the S-IWF and the MME is converted into the interaction between the IMSC and the MME for processing.

It should be noted that, the S-IWF may also be integrated in a source MSC, or integrated in a source MSC and a target MSC at the same time without influencing the implementation of the present invention. The technical solution of this embodiment is applicable to any of the above embodiments for suspending a bearer.

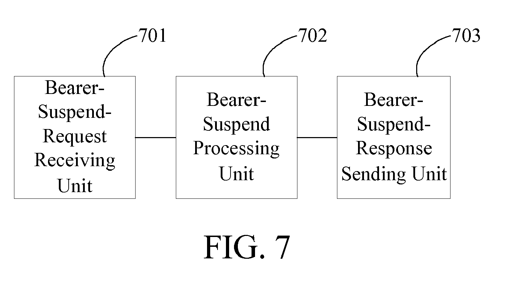

In an embodiment, the present invention provides a gateway agent. Referring to FIG. 7, the gateway agent includes a bearer-suspend-request receiving unit 701 and a bearer-suspend processing unit 702.

The bearer-suspend-request receiving unit 701 is adapted to receive a Bearer Suspend Request sent by an MME. The Bearer Suspend Request includes a bearer identity or a user identity.

The bearer-suspend processing unit 702 is adapted to suspend a bearer corresponding to the bearer identity or a bearer corresponding to the user identity according to the bearer identity or the user identity included in the received Bearer Suspend Request.

The bearer-suspend processing unit further includes a bearer receiving subunit, a determining subunit, and a processing subunit.

The bearer receiving subunit is adapted to receive a data packet of a bearer.

The determining subunit is adapted to determine whether the received bearer is a corresponding bearer in the Bearer Suspend Request received by the bearer-suspend-request receiving unit and notify a determination result to the processing subunit.

The processing subunit is adapted to buffer or discard the data packet of the bearer and stop paging a UE when the received bearer is a corresponding bearer in the Bearer Suspend Request.

Preferably, the gateway agent may also include a bearer-suspend-response sending unit 703 adapted to send a Bearer Suspend Response to the MME after the bearer suspension is completed.

Through the above technical solutions, when a UE is handed over from an EUTRAN to a GERAN, an MME sends a Bearer Suspend Request to a gateway agent and a bearer that needs to be suspended is suspended. In this manner, network resources of the user in the EUTRAN are reserved. Thereby, corresponding bearers can be rapidly resumed to continue original services in the EUTRAN when the UE is handed over from the GERAN back to the EUTRAN.

In addition to the embodiments of suspending a bearer, the present invention further provides a bearer resumption method, which includes the following steps. A gateway agent receives a Bearer Resume Request sent by an MME in a process of handover of a UE from a GERAN to an EUTRAN or TAU or Service Request. The Bearer Resume Request includes a bearer identity or a user identity. The gateway agent resumes a bearer corresponding to the bearer identity or a bearer corresponding to the user identity according to the Bearer Resume Request.

The MME sends the Bearer Resume Request to the gateway agent according to a target network type and/or a user bearer type. For example, when a network side or a user needs to perform operations of bearer suspension or bearer resumption for bearers of different services, the MME maps different user bearer types according to the different services, and then determines which bearers need to be suspended or resumed according to the target network types, so that the Bearer Resume Request includes bearer identity information about the bearers. When all the bearers of the user need to be resumed, the MME may also include user identity information in the Bearer Resume Request, indicating that all the bearers corresponding to the user identity are resumed.

The MME may send the Bearer Resume Request to the gateway agent after receiving a Relocation Required message or a TAU Request message or a Service Request message.

The gateway agent may be an SGW or a PGW. When the gateway agent is a PGW, the PGW receives a Bearer Resume Request forwarded by the MME through the SGW.

After the bearer is resumed, the gateway agent sends a Bearer Resume Response to the MME. The MME sends the Bearer Resume Response to the UE to notify the UE that the bearer is already resumed.

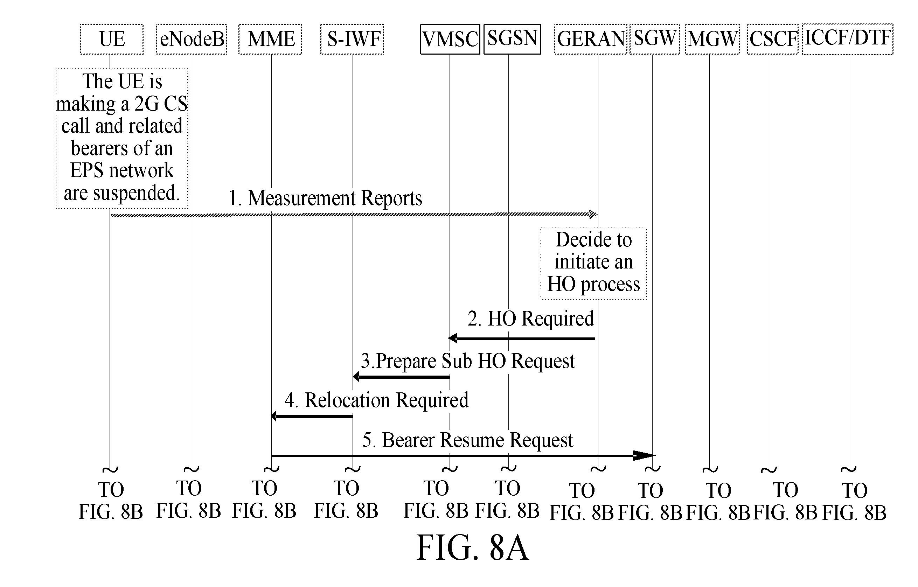

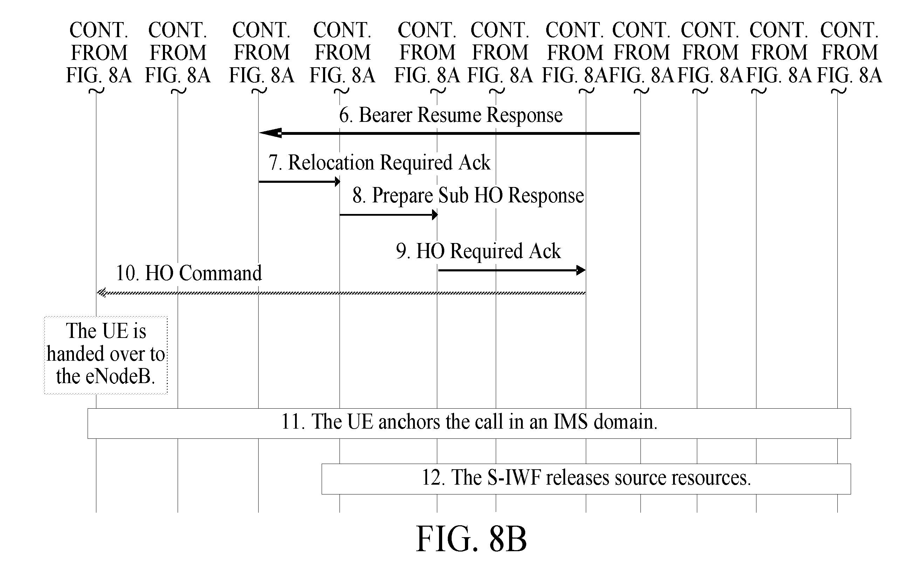

Several embodiments of resuming a bearer are illustrated below with reference to Figures 8 to 12.

### Embodiment 7

When a user is handed over from a GERAN back to an EUTRAN, in a stage of handover resource preparation, an S-IWF instructs an MME to make handover resource preparation. The MME then instructs an SGW to resume a suspended bearer. Afterward, the user is handed over to the EUTRAN, that is, the resumed bearer may be adopted to continue the services. Referring to FIG. 8, the specific steps are as follows.

In step 1, a UE sends Measurement Reports to the GERAN.

In step 2, the GERAN decides to initiate an HO process according to the Measurement Reports from the UE, and sends an HO Required to a VMSC.

In step 3, the VMSC sends a Prepare Sub HO Request to the S-IWF according to a target cell identity, so as to instruct the S-IWF to perform a CS-CS HO process.

In step 4, the S-IWF sends a Relocation Required to instruct the MME to make handover resource preparation.

In step 5, the MME finds that a bearer of the user is in a suspended state, and sends a Bearer Resume Request including a bearer identity or a user identity that needs to be resumed to the SGW, so as to instruct the SGW to resume the bearer.

In step 6, the SGW resumes related bearers according to the bearer identity or the user identity sent by the MME, and sends a Bearer Resume Response to notify the MME that the bearer resumption is successful.

In step 7, the MME sends a Relocation Required Ack to notify the S-IWF that the source resource preparation is completed.

In steps 8 and 9, the S-IWF notifies the GERAN through the VMSC that the target resource preparation is completed.

In step 10, the GERAN sends an HO command to instruct the user to be handed over to the EUTRAN.

In step 11, after the user is handed over to the EUTRAN, a call is anchored in an IMS network.

In step 12, the S-IWF releases the source resources.

### Embodiment 8

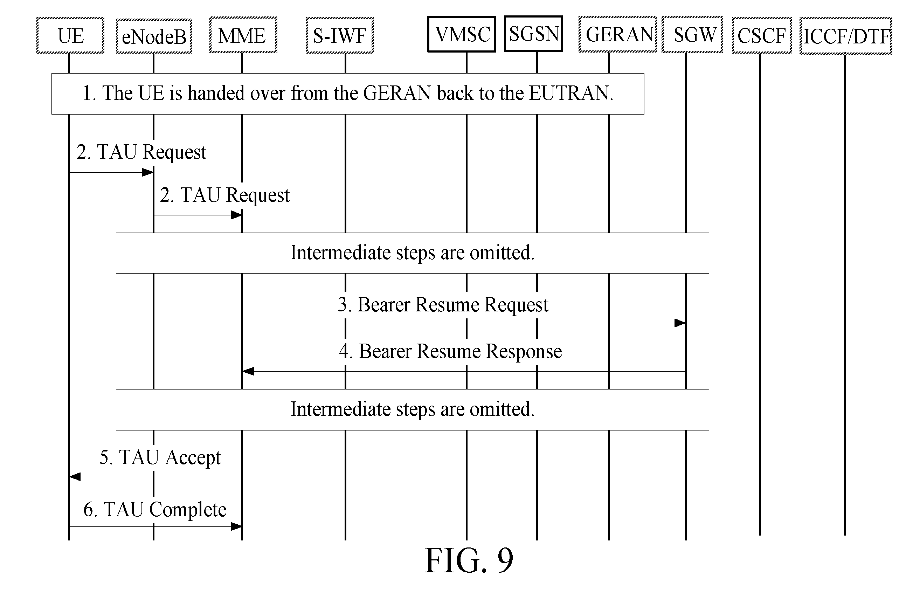

Referring to FIG. 9, in this embodiment, a bearer resumption operation when a user is handed over from a GERAN back to an EUTRAN is completed through a TAU process. The specific steps are as follows.

In step 1, a UE is handed over from the GERAN back to the EUTRAN.

In step 2a, the user sends a TAU Request to an eNodeB.

In step 2b, the eNodeB forwards the TAU Request to an MME according to a globally unique temporary identity (GUTI).

Apart of non-key intermediate processes are omitted.

In step 3, the MME sends a Bearer Resume Request to an SGW. The message includes a user identity, and the SGW acknowledges all the bearers that need to be resumed through the user identity; or the message includes a bearer identity, and the SGW acknowledges all the bearers that need to be resumed through the bearer identity.

In step 4, the SGW resumes a corresponding bearer and sends a Bearer Resume Response to the MME.

In step 5, a network side MME sends a TAU Accept message to the UE. The message includes a GUTI and a tracking area list (TA list).

In step 6, the UE sends a TAU Complete message to the network side MME, indicating that a GUTI value is already received.

### Embodiment 9

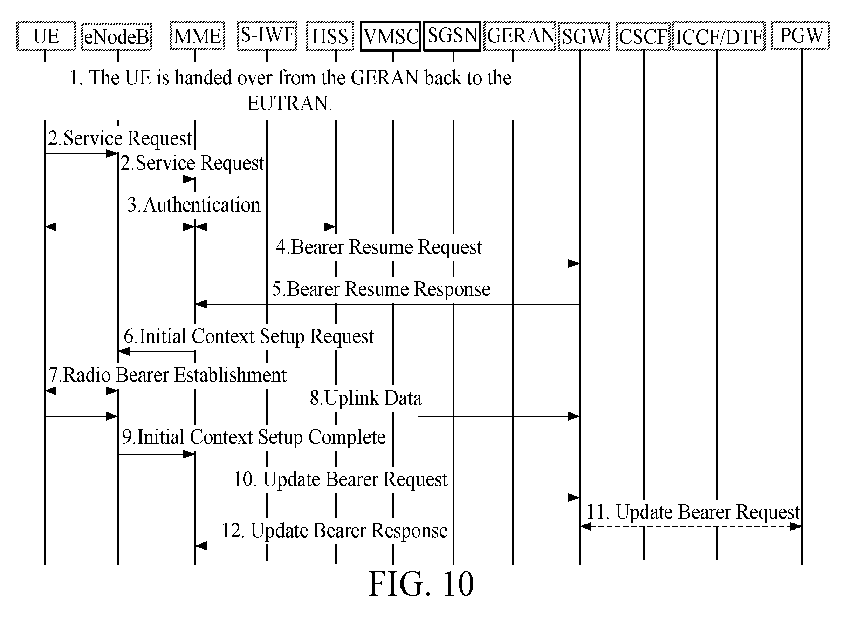

Referring to FIG. 10, in this embodiment, a bearer resumption operation when a user is handed over from a GERAN back to an EUTRAN is completed through a Service Request process. The specific steps are as follows.

In step 1, a UE is handed over from the GERAN back to the EUTRAN.

In step 2a, the UE sends a Service Request message to an eNodeB. The message includes a Resume Bearer Indication that indicates the MME to initiate a bearer resumption operation.

In step 2b, the eNodeB forwards the request to an MME. The message also includes the Resume Bearer Indication that indicates the MME to resume all the suspended bearers.

In step 3, which is optional, authentication between the UE, the MME, and an HSS is implemented.

In step 4, the MME sends a Bearer Resume Request to an SGW. The message includes a bearer identity (or a user identity, and all the bearer identities related to the user are mapped by the SGW according to the user identity), so as to instruct the SGW to resume a bearer corresponding to the identity.

In step 5, the SGW resumes all the bearers related to the user, that is, the SGW may accept data packets of the user or page the user. The SGW then sends a Bearer Resume Response to the MME, indicating the MME that the bearer resumption operation is completed.

In step 6, the MME sends an Initial Context Setup Request message to the eNodeB.
The message includes bearer context information and a Bearer Resume Complete Indication.

In step 7, the eNodeB initiates a Radio Bearer Establishment process. The process includes the Bearer Resume Complete Indication to inform the UE that the bearers are already resumed and an uplink route is established.

In step 8, the user sends Uplink Data to the SGW (or a PGW).

In step 9, the eNodeB sends an Initial Context Setup Complete message to the MME.
The message includes bearer context information.

In step 10, the MME sends an Update Bearer Request to the SGW. The message includes bearer context information and a radio access type (RAT).

In step 11, the SGW compares a previous RAT with the current RAT. If a change occurs, the PGW needs to be informed to update the RAT.

In step 12, the SGW sends an Update Bearer Response to the MME.

### Embodiment 10

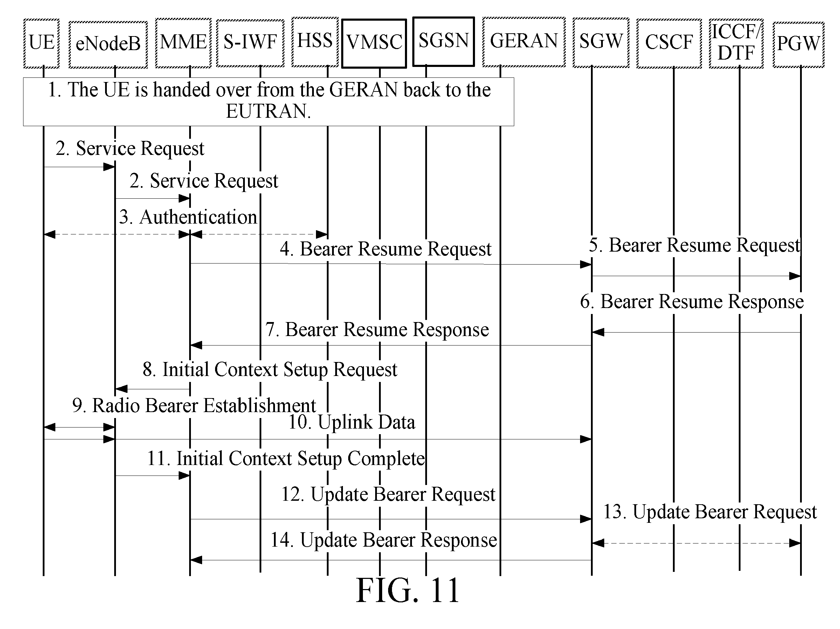

Referring to FIG. 11, in this embodiment, a bearer resumption operation when a user is handed over from a GERAN back to an EUTRAN is completed through a Service Request process. A difference between this embodiment and Embodiment 9 is that the resumption operation needs to be informed to a PGW, so that the PGW will not send downlink data packets or accept Uplink Data packets. The specific steps are as follows.

Steps 1 to 3 are the same as steps 1 to 3 in Embodiment 9.

In step 4, an MME sends a Bearer Resume Request to an SGW. The message includes a PGW address and a bearer identity or a user identity. The message instructs the SGW to resume the use of a corresponding bearer and resume the paging service.

In step 5, the SGW continues to send the Bearer Resume Request to the PGW. The message includes the bearer identity or the user identity, so as to instruct the PGW to resume the use of the corresponding bearer.

In step 6, after resuming the use of the corresponding bearer, the PGW notifies the SGW that the bearer resumption is completed. The message includes a Bearer Resume Complete Indication.

In step 7, the SGW notifies the MME that the bearer resumption is completed. The message includes the Bearer Resume Complete Indication.

Steps 8 to 14 are the same as steps 6 to 12 in Embodiment 9.

### Embodiment 11

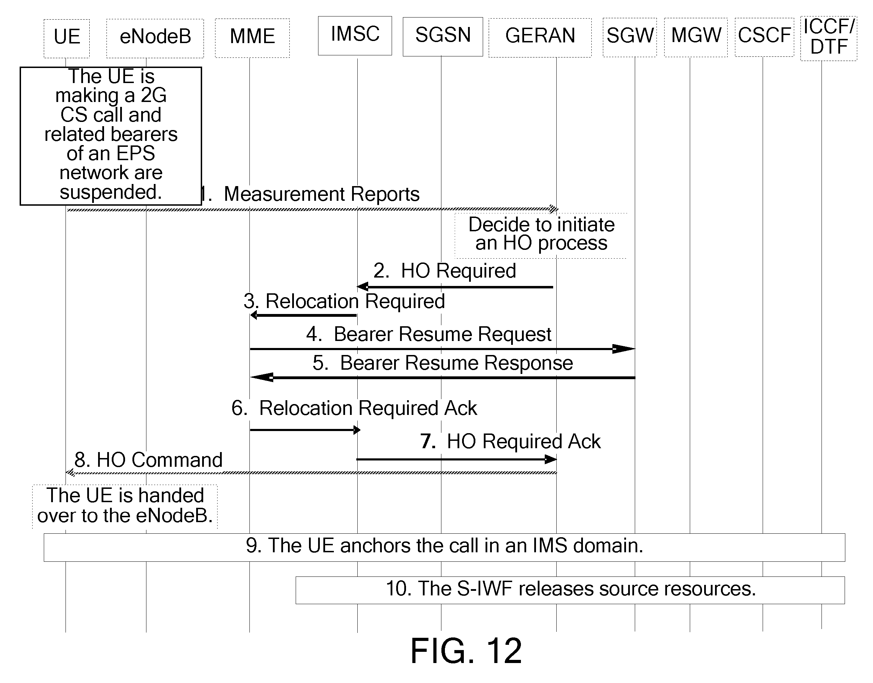

The functions of an S-IWF are integrated in a VMSC to form a new network entity IMSC. When a user is handed over from a GERAN back to an EUTRAN, in a stage of handover resource preparation, the IMSC instructs an MME to make handover resource preparation. The MME then instructs the SGW to resume a suspended bearer. Afterward, the user is handed over to the EUTRAN, that is, the resumed bearer may be adopted to continue the services. Referring to FIG. 12, this embodiment and Embodiment 7 are basically the same. Differences are that the interaction between the S-IWF and the VMSC is internal interaction which will not be described herein, and the interaction between the S-IWF and the MME is converted into the interaction between the IMSC and the MME for processing.

It should be noted that, the S-IWF may also be integrated in a source MSC, or integrated in a source MSC and a target MSC at the same time without influencing the implementation of the present invention. The technical solution of this embodiment is applicable to any of the above embodiments for resuming a bearer.

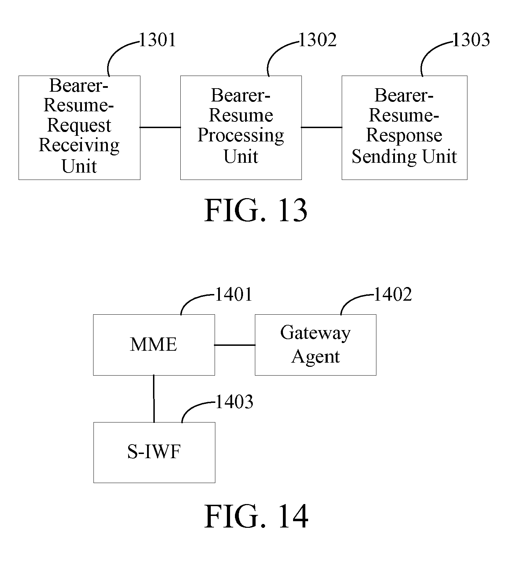

Corresponding to the bearer resumption method, the present invention further provides a gateway agent. Referring to FIG. 13, the gateway agent includes a bearer-resume-request receiving unit 1301 and a bearer-resume processing unit 1302.

The bearer-resume-request receiving unit 1301 is adapted to receive a Bearer Resume Request sent by an MME. The Bearer Resume Request includes a bearer identity or a user identity.

The bearer-resume processing unit 1302 is adapted to resume a bearer corresponding to the bearer identity or a bearer corresponding to the user identity according to the bearer identity or the user identity included in the received Bearer Resume Request.

Preferably, the gateway agent may also include a bearer-resume-response sending unit 1303 adapted to send a Bearer Resume Response to the MME after the bearer resumption is completed.

In an embodiment, the present invention further provides a mobile communication system. Referring to FIG. 14, the mobile communication system includes an MME 1401 and a gateway agent 1402.

The MME 1401 is adapted to send a Bearer Suspend Request or a Bearer Resume Request. The request message includes a bearer identity or a user identity.

The gateway agent 1402 is adapted to suspend or resume a bearer corresponding to the bearer identity or a bearer corresponding to the user identity according to the Bearer Suspend Request or Bearer Resume Request sent by the MME. After the bearer suspension or resumption is completed, the gateway agent sends a response message to the MME. The gateway agent may be an SGW or a PGW.

In the technical solutions, when a user is in an EUTRAN, an operator may suspend some services or bearers according to policies or service requirements. However, network resources of the user in the EUTRAN are not released, so that the services or bearers may be rapidly resumed when needed, thus bringing better experience to the user. In the use of an SR VCC service, when the user is handed over from the EUTRAN to a GERAN, non-voice bearer resources in the EUTRAN are reserved, thereby preventing the network resources from being established again in the EUTRAN when the user is handed over from the GERAN back to the EUTRAN. In this manner, corresponding bearer resources are resumed rapidly to continue original services in the EUTRAN, and the continuity of the voice services is ensured.

Persons of ordinary skill in the art should understand that all or a part of the steps of the method according to the embodiments of the method may be implemented by a program instructing relevant hardware. The program may be stored in a computer readable storage medium. When the program is run, the steps of the method according to the embodiments are performed. The storage medium may be any medium that is capable of storing program codes, such as a ROM, a RAM, a magnetic disk, or an optical disk.

The above descriptions are merely exemplary embodiments of the present invention. Persons of ordinary skill in the art should understand that any modification and improvement made without departing from the principle of the present invention shall fall within the protection scope of the present invention.

## Claims

1. A bearer suspension method, comprising:
receiving, by a gateway agent, a Bearer Suspend Request sent by a mobility management entity (MME) when a user equipment (UE) is handing over from an evolved universal mobile telecommunications system (UMTS) terrestrial radio access network (EUTRAN) to a global system for mobile communications (GSM)/enhanced data rates for GSM evolution (EDGE) radio access network (GERAN), wherein the Bearer Suspend Request includes a bearer identity or a user identity; and
suspending a bearer corresponding to the bearer identity or a bearer corresponding to the user identity according to the Bearer Suspend Request.

2. The method according to claim 1, wherein the suspending the bearer corresponding to the bearer identity or the bearer corresponding to the user identity comprises:
buffering or discarding a data packet and stopping paging the UE after receiving the data packet of the bearer.

3. The method according to claim 1, wherein the MME sends the Bearer Suspend Request according to at least one of a target network type and a user bearer type.

4. The method according to claim 1, 2, or 3, wherein the MME sends the Bearer Suspend Request after receiving a Relocation Required message, or a Relocation Request Ack message, or an HO Complete message.

5. The method according to claim 1, wherein the gateway agent is a serving gateway (SGW) or a packet data network gateway (PGW).

6. The method according to claim 5, wherein the PGW receives the Bearer Suspend Request forwarded by the SGW and sent by the MME when the gateway agent is the PGW.

7. The method according to claim 1, wherein after the gateway agent suspends the bearer, the method further comprises: sending, by the gateway agent, a Bearer Suspend Response to the MME.

8. The method according to claim 7, wherein after the gateway agent sends the Bearer Suspend Response to the MME, the method further comprises: sending, by the MME, the Bearer Suspend Response to the UE, and stopping, by the UE, sending Uplink Data of the suspended bearer according to the Bearer Suspend Response.

9. The method according to claim 1, wherein the MME sends the Bearer Suspend Request to the gateway agent after receiving the Bearer Suspend Request sent by a single radio voice call continuity (SR VCC) inter-working function (S-IWF).

10. A gateway agent, comprising:
a bearer-suspend-request receiving unit, adapted to receive a Bearer Suspend Request sent by a mobility management entity (MME), wherein the Bearer Suspend Request includes a bearer identity or a user identity; and
a bearer-suspend processing unit, adapted to suspend a bearer corresponding to the bearer identity or a bearer corresponding to the user identity according to the bearer identity or the user identity included in the Bearer Suspend Request received by the bearer-suspend-request receiving unit.

11. The gateway agent according to claim 10, wherein the bearer-suspend processing unit comprises:
a bearer receiving subunit, adapted to receive a data packet;
a determining subunit, adapted to determine whether a bearer corresponding to the received data packet is a bearer corresponding to the Bearer Suspend Request received by the bearer-suspend-request receiving unit; and
a processing subunit, adapted to buffer or discard the data packet of the bearer and stop paging a user equipment (UE) when a determination result of the determining subunit is positive.

12. The gateway agent according to claim 10 or 11, further comprising:
a bearer-suspend-response sending unit, adapted to send a Bearer Suspend Response to the MME after the bearer-suspend processing unit suspends the bearer.

13. The gateway agent according to claim 10, wherein the gateway agent is a serving gateway (SGW) or a packet data network gateway (PGW).

14. A bearer resumption method, comprising:
receiving, by a gateway agent, a Bearer Resume Request sent by a mobility management entity (MME) in a process of handover of a user equipment (UE) from a global system for mobile communications (GSM)/enhanced data rates for GSM evolution (EDGE) radio access network (GERAN) to an evolved universal mobile telecommunications system (UMTS) terrestrial radio access network (EUTRAN) or in a process of tracking area update (TAU) or in a process of Service Request, wherein the Bearer Resume Request includes a bearer identity or a user identity; and
resuming a bearer corresponding to the bearer identity or a bearer corresponding to the user identity according to the Bearer Resume Request.

15. The method according to claim 14, wherein the MME sends the Bearer Resume Request according to at least one of a target network type and a user bearer type.

16. The method according to claim 14 or 15, wherein the MME sends the Bearer Resume Request after receiving a Relocation Required message, or a TAU Request message, or a Service Request message.

17. The method according to claim 16, wherein the TAU Request message or the Service Request message comprises a Resume Bearer Indication, and the MME sends the Bearer Resume Request according to the Resume Bearer Indication after receiving the TAU Request message or the Service Request message.

18. The method according to claim 14, wherein the gateway agent is a serving gateway (SGW) or a packet data network gateway (PGW).

19. The method according to claim 18, wherein the PGW receives the Bearer Resume Request forwarded by the SGW and sent by the MME when the gateway agent is the PGW.

20. The method according to claim 14, wherein after the gateway agent resumes the bearer, the method further comprises:
sending, by the gateway agent, a Bearer Resume Response to the MME.

21. The method according to claim 20, wherein after the gateway agent sends the Bearer Resume Response to the MME, the method further comprises:
sending, by the MME, the Bearer Resume Response to the UE.

22. A gateway agent, comprising:
a bearer-resume-request receiving unit, adapted to receive a Bearer Resume Request sent by a mobility management entity (MME), wherein the Bearer Resume Request includes a bearer identity or a user identity; and
a bearer-resume processing unit, adapted to resume a bearer corresponding to the bearer identity or a bearer corresponding to the user identity according to the bearer identity or the user identity included in the Bearer Resume Request received by the bearer-resume-request receiving unit.

23. The gateway agent according to claim 22, further comprising:
a bearer-resume-response sending unit, adapted to send a Bearer Resume Response to the MME after the bearer-resume processing unit resumes the bearer.

24. The gateway agent according to claim 22, wherein the gateway agent is a serving gateway (SGW) or a packet data network gateway (PGW).

25. A mobile communication system, comprising:
a mobility management entity (MME), adapted to send a Bearer Suspend Request or a Bearer Resume Request to a gateway agent, wherein the Bearer Suspend Request or the Bearer Resume Request includes a bearer identity or a user identity; and
a gateway agent, adapted to suspend or resume a bearer corresponding to the bearer identity or a bearer corresponding to the user identity according to the Bearer Suspend Request or the Bearer Resume Request sent by the MME.

26. The system according to claim 25, further comprising:
a single radio voice call continuity (SR VCC) inter-working function (S-IWF), adapted to send the Bearer Suspend Request or the Bearer Resume Request to the MME.

27. The system according to claim 25, wherein the gateway agent is a serving gateway (SGW) or a packet data network gateway (PGW).

28. The system according to claim 25 or 27, wherein the gateway agent is further adapted to send a Bearer Suspend Response or a Bearer Resume Response to the MME after bearer suspension or bearer resumption.
